# EUROPEAN PATENT SPECIFICATION

(11) **EP 3 896 044 B1**
(45) Date of publication and mention of the grant of the patent: **27.03.2024**
(21) Application number: 21000046.9
(22) Date of filing: 12.02.2021
(51) Int. Cl.: C03C 25/28, C09D 125/14

(54) **MIXTURE FOR ENHANCING OPACITY**
MISCHUNG ZUR ERHÖHUNG DER OPAZITÄT
MÉLANGE D'AMÉLIORATION DE L'OPACITÉ

(30) Priority: 17.04.2020 EP 20170038
(43) Date of publication of application: 20.10.2021
(73) Proprietor: Depco-Trh Pty Ltd, Williamstown Victoria 3016 (AU)
(72) Inventor: PRICE, David, Williamstown, Victoria 3016 (AU); GIANSIRACUSA, Joseph, Ascot Vale, Victoria 3032 (AU)
(74) Representative: Demski, Siegfried

(56) References cited:
- EP-A1- 1 122 263
- WO-A1-2017/154995
- US-A1- 2007 292 618
- US-B2- 8 765 864

## Description

### Field of the invention

The invention relates to a mixture which offers a wide range of possible applications where opacity is desired, to a method for producing said mixture, to the use of said mixture as an opacifier or substitute material in opacifying compositions, as a surface coating material, and to laminates or coatings comprising said mixture as a component.

### Background of the invention

In the state of the art, TiO₂ is disclosed as a preferred opacifying agent due to its superior refraction index (Rutile TiO₂ RI 2.73, Anatase TiO₂ RI 2.55, calcium carbonate CaCOₐ RI 1.63). According to the state of the art, the performance of TiO₂ can be improved by reducing agglomeration of the TiO₂ particles, for example by a physical spacing effect. TiO₂ is used in paints, plastics, paper and laminates to provide high opacity white surfaces, as well as non-white surfaces when combined with other pigments or dyes to provide a desired colour. The availability and cost of TiO₂ can be a significant factor in the manufacture of intermediate products such as paint and paper which has led to the development and industrial use of products that, while less efficient in providing opacity, are used as extenders for TiO₂ to lower the cost and improve effectiveness of TiO₂. Examples are mineral extenders such as kaolin, synthetic extenders such as Evoque^{™} and Ropaque^{™}(Dow Chemical Company), as well as TiO₂ particles with a thicker protective coating Ti-Pure^{™} Select TS-6300 (Chemours).

Currently TiO₂ (EC No. 236-675-5 CAS No. 13463-67-7) is suspected to be carcinogenic (Cat 2) by inhalation, the new ECHA classification being applied from 1.10.2021.

Patent WO2012/065230 describes the use of melamine cyanurate (MC) in an amount effective to provide or enhance opacity in the manufacture of decorative laminates. US-87665864 discloses an aqueous dispersion consisting essentially of: at least 25 weight percent, based on the total weight of the dispersion, of a mixture of cyanuric acid and melamine, an additive selected from the group consisting of b') dimethyldiallylammonium chloride or a homopolymer or a copolymer thereof; and b") a low molecular weight styrene/maleic anhydride copolymer or a partial ester derivative or hydrolysis product thereof, a base and water.

In the manufacture of decorative laminates, such as compact laminates, high pressure laminates (HPL), continuous pressure laminates (CPL) and low pressure laminates (LPL also referred to as DPL or LPM) the thermosetting resin component contains one or more of a formaldehyde based resin such as urea formaldehyde (UF), melamine formaldehyde (MF) or phenol formaldehyde (PF), or mixtures of these resin types, for example UF + M, or UF + MF. Laminates based on pre-impregnated decor paper where the impregnation is applied on the paper making machine predominately use non-formaldehyde containing resins.

Formaldehyde (EC No. 200-001-8) (CAS No. 50-00-0) is classified by the European Chemicals Agency ECHA as a category 1B carcinogen, and among other classifications, as category 1 skin sensitiser. A reduction in the amount of formaldehyde used in the manufacture of decorative laminates offers the potential to improve occupation health and safety, as well as addressing consumer and post consumer concerns about products that contain formaldehyde.

### Summary of the invention

In a first aspect, the invention relates to a mixture comprising styrene maleic anhydride copolymer amic acid, cyanuric acid, and melamine.

Styrene maleic anhydride copolymer is available as a solid material (example: Polyscope XIRAN^{®} grade SZ40005, 40% maleic anhydride and 5000 Mw). Styrene maleic anhydride copolymers are available with various maleic anhydride contents, various molecular weights and in solution at various solid contents. Through a known process styrene maleic anhydride copolymer can be solubilized in water by reaction with ammonia to form the styrene maleic anhydride copolymer amic acid, as shown in the following:

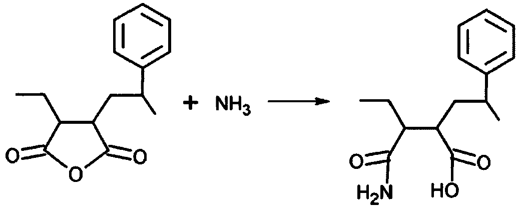

The styrene maleic anhydride copolymer used to produce the styrene maleic anhydride copolymer amic acid has preferably a maleic anhydride content in the range of 25 to 65 % by weight, more preferably in the range of 35 to 50 % by weight. The molecular weight of the styrene maleic anhydride copolymer used to produce the styrene maleic anhydride copolymer amic acid used in one version of the inventive mixture is preferably in the range of 3500 to 10000. According to the present invention the styrene maleic anhydride copolymer amic acid can be used with various solid contents and in with various viscosities. As an example, Polyscope XIRAN^{®} grade SL40005 N30 amic acid is 40% maleic anhydride, 5000 Mw and 30% solids. According to the invention, the solid content refers to the amount of styrene maleic anhydride copolymer amic acid in the aqueous solution, meaning if the water were evaporated from 100g of a 30% solids styrene maleic anhydride copolymer amic acid solution there would be 30g of the styrene maleic anhydride copolymer amic acid remaining.

As used herein, the term "cyanuric acid" refers to 1,3,5-Triazinane-2,4,6-trione, which is also known as isocyanuric acid, having the molecular formula C₃H₃N₃O₃ or C₃N₃(OH)₃ and CAS No.108-80-5.

Melamine is an organic compound with a preferred IUPAC name 1,3,5-Triazine-2,4,6-triamine and CAS No. 108-78-1. In one exemplary application melamine is used as starting material for the production of melamine formaldehyde resins. Melamine formldehyde resins cured under heat and pressure provide a clear, chemical resistant surface to a laminate surface.

The mixture may comprise styrene maleic anhydride copolymer amic acid in an mount in the range between 0.5 to 25 % by weight. Preferably the mixture comprises styrene maleic anhydride copolymer amic acid in the range between 1 to 15 % by weight, most preferably in the range between 2 to 10% by weight.

Preferably, styrene maleic anhydride copolymer amic acid is the minor component in the mixture, and cyanuric acid and melamine are the major components. A preferred ratio of the mixture is:
- 100g of an aqueous solution of styrene maleic anhydride copolymer amic acid (30% by weight of styrene maleic anhydride copolymer amic acid)
- 166g cyanuric acid (powder)
- 165g melamine (powder)
- 653g water

The components ratio may be modified to achieve the desired outcome of a homogenous suspension, however a decreasing amount of styrene maleic anhydride copolymer amic acid in the formulation leads to a solid mass that is difficult to maintain as a suspension. Nevertheless, if the amount of styrene maleic anhydride copolymer amic acid is reduced, a homogenous suspension can maintained by using additional water as a solvent. An example with a different ratio of the mixture is:
- 20g Styrene maleic anhydride copolymer amic acid (30% solids)
- 166g cyanuric acid (powder)
- 165g melamine (powder)
- 661g water

The mixture is preferably a suspension. The contained particles preferably have a particle size of less than 3 µm, more preferably in the range between 0.5 to <3 µm. Preferably the majority, i.e. more than 50 %, of the particles are smaller than 3µm. The particle size can be measured with a laser diffraction particle size analyzer, suitable for measuring particle sizes 0.1 µm - 3 mm (Malvern Mastersizer 3000). A small amount of sample (~0.25g) is required for analysis, and results can be recorded within 10 minutes/sample.

The mixture may further comprise a photocatalyst material. By the addition of at least one photocatalyst to the inventive mixture, an advantageous surface characteristic is gained. Said photocatalyst material preferably comprises TiO₂ as the basic component of the photocatalyst material. The photocatalyst may be nano-scale TiO₂ (as examples Kronoclean 7000/7050 or Aeroxide P25 or Ishihara ST/STS series or alternative suppliers) or modified TiO₂ photocatalyst, for example but not limited to doping TiO₂ with materials such as Wolfram, Molybdenum, Cerium, Copper, Silver or Nitrogen, or combinations of such materials incorporated to enhance antimicrobial, antibacterial and antiviral surface activity as well as an easier to clean surface.

The mixture may comprise one or more materials selected from the group consisting of pigments, dyes, antimicrobial material, antibacterial material, fire retardant material and hard anti-abrasion material.

Thus, the inventive mixture may be modified in colour by the addition of pigments or dyes, for example but not limited to colour pigments such as Bayferrox^{®} and Colortherm^{®} (Lanxess). Furthermore, the inventive mixture may be modified by the addition of functional chemicals such as but not limited to antimicrobial or antibacterial and/or antiviral materials.

If transport costs exert an intolerable negative economic impact to the cost of using the mixture, water may be removed from the mixture, preferably by evaporation. Later, the mixture can be reconstituted to a preferred solids content and viscosity.

According to a further aspect, the invention relates to a method for producing the mixture according to the invention. The method comprises the steps of
a) mixing styrene maleic anhydride copolymer amic acid and cyanuric acid
b) adding melamine.

In a first step, the styrene maleic anhydride copolymer amic acid and cyanuric acid are combined, and subsequently melamine is added. The mixture is preferably thoroughly stirred and blended including homogenization to a desired consistency.

The cyanuric acid in powder form may be added directly to an aqueous solution of styrene maleic anhydride copolymer amic acid, however this causes a rapid increase in viscosity and necessitates immediate strong mixing to achieve a homogenous suspension. Therefore, in a preferred step, the cyanuric acid is pre-dispersed in water before being mixed with the styrene maleic anhydride copolymer amic acid.

The melamine is is preferably pre-dispersed in water before being added to the mixture obtained from step a).

The cyanuric acid whether or not pre-dispersed in water, is combined with the aqueous styrene maleic anhydride copolymer amic acid solution. In one embodiment the cyanuric acid is dispersed in water followed by the addition of a liquid styrene maleic anhydride copolymer amic acid, for example Polyscope XIRAN^{®} grade SL40005 N30 amic acid. During the mixing of the cyanuric acid and the styrene maleic anhydride copolymer amic acid there is a thickening of the dispersion. The viscosity can be reduced to a preferred level by the addition of water, subsequently the melamine powder is added and the combination of cyanuric acid, styrene maleic anhydride copolymer amic acid, melamine and water is thoroughly mixed to provide a homogenous suspension. In a preferred step the cyanuric acid and melamine are added to the styrene maleic anhydride copolymer amic acid while the styrene maleic anhydride copolymer amic acid is at an elevated temperature, for example immediately after the solid styrene maleic anhydride copolymer has been converted to the amic acid form, a process that usually takes place at around 90°C.

The addition of water as a solvent at one or more stages in the manufacturing process enables easier blending, homogenization, viscosity control and to achieve a desired solids content. The particle size distribution of the melamine powder may be reduced in a separate process step prior to its addition to the combination of styrene maleic anhydride copolymer amic acid, cyanuric acid and water. According to the invention, the mixture obtained from step b) can be homogenized. The mixture obtained from step b) can be comminuted to achieve small particle sizes.

Optionally the method comprises the step of
c) adding one or more materials selected from the group consisting of photocatalyst material, pigments, dyes, antimicrobial material, antibacterial material, fire retardant material and hard anti-abrasion material.

It is also foreseen that the pH of the suspension may be adjusted when the suspension is to be combined with other materials that are sensitive to pH change, for example impregnation or coating resins based on amino formaldehyde resins.

An exemplary use of the inventive mixture is in the manufacture of decorative or industrial laminates such as low pressure melamine laminates, high pressure laminates, continuous pressure laminates, compact laminates and preimpregnated foils.

The mixture according to the invention may be used as an opacifier or extender of opacifying agents. Preferably, the inventive mixture may be used together with TiO₂ to improve opacity effectiveness of the TiO2 in applications such as paints, plastics and paper.

In the manufacture of a decor paper or pre-impregnated decor paper for decorative or industrial laminates the inventive suspension may be applied at one or more stages in the papermaking process.

The mixture may be used as a component of a decor paper included in the mass before forming of the decor paper web on a paper making machine. The mixture may also be used as a component of a decor paper applied to the decor paper after formation of a paper web, preferably via a coating unit, for example a size press (leimpress). Use of the inventive mixture after formation of the paper as a surface coating to improve opacity and/or printability may be done with or without the addition of TiO₂ or alternative mineral pigments which may have a nano-scale particle size distribution.

The inventive mixture may be applied to the printing surface of a decor paper before the printing step, preferably applied in-line before printing takes place.

The printing method is not limited to the predominate method of rotogravure used for decor paper printing. The inventive mixture may be used in a digital inkjet printing process by application to the surface of raw decor paper, preimpregnated decor paper, impregnated decor paper followed by drying and then presented to the inkjet printing section of the printing machine. Depending on the colour of the raw base paper, the inventive mixture may be pigmented to complement the raw base paper colour.

The mixture may be used as a component of a formaldehyde free resin material used in the manufacture of a pre-impregnated decor paper. The mixture may also be used as a replacement material for a portion of an amino formaldehyde resin used in the saturation and/or coating of a decor paper. When used in the first stage of decor paper saturation by inclusion in a urea formaldehyde resin or melamine formaldehyde resin, an added benefit in addition to improved opacity is that there is a reduction in the physical amount of formaldehyde per square meter of decorative surfacing. For example, replacing 40% of the urea formaldehyde resin with the inventive suspension provides a reduction in physical formaldehyde content of about 25%, the reduction % dependent on the molar ratio of the urea formaldehyde resin and the amount of urea formaldehyde resin in the fully impregnated b-stage decor paper.

The reduction in the physical amount of formaldehyde in an impregnated decor paper, particularly the urea formaldehyde component, reduces the potential of unwanted formaldehyde emissions from impregnated decor paper during individual process steps, such as during drying and advancing the cure of the impregnated decor paper during the impregnation process, and during the hot pressing process where the impregnated decor paper has heat and pressure applied to achieve the final laminate surface.

According to a further aspect, the invention relates to a laminate comprising a mixture according to the invention. Preferably, a laminate component, e.g. a decor paper, comprises the mixture. In some laminate structures, it may be desirable to not include any formaldehyde in the laminate surface. An example is a substrate woodpanel manufactured with a binder that does not include formaldehyde, which in the industry are referred to as "no added formaldehyde" (NAF) or "zero added formaldehyde" (ZAF). As a non-limiting example, this could be oriented strand board (OSB) using pMDI as the binder, later overlaid with a glasvlies (nonwoven glass veil) which before or after attachment of the glasvlies to the OSB panel, is impregnated with the inventive mixture. The inventive mixture used to impregnate the glasvlies may be modified by the addition of functional chemicals such as but not limited to fire retardant additives, for example magnesium sulphate, preferably magnesium sulphate heptahydrate. Alternative fire retardant materials such as ammonium polyphosphate, or combinations of fire retardant materials may also be incorporated to modify the inventive mixture to achieve desired properties of the laminate surface material. Hard materials, such as corundum, may be incorporated into the inventive mixture, preferably as close as possible to the external surface uppermost in practical use of the laminate surface.

The present invention is further illustrated by the attached Figures and the Experimental part.

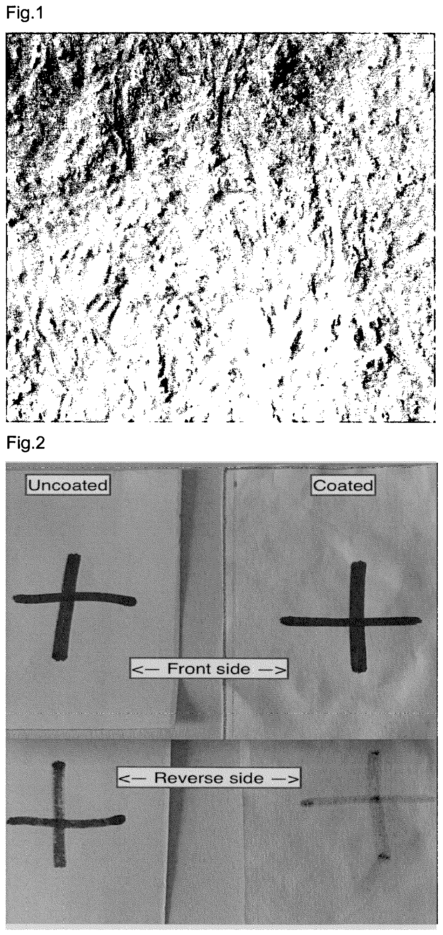

Fig.1 is a picture of a 53g/m2 decor paper 21% ash content to which a coating of the inventive mixture has been applied liberally to both surfaces of the decor paper, and the excess removed by squeezing between 2 steel rollers. The end weight of the coated decor paper is 67g/m2.

Fig.2 is a picture of the front and reverse sides of the original 53g/m2 decor paper and the 67g/m2 coated decor paper showing that the ink from a Permanent Marker pen has less penetration through the decor paper.

### Experimental part

### Example 1

70g/m2 white decor paper with 32% ash content
First bath saturation with urea formaldehyde resin, molar ratio 1:1.6
50g/m2 urea formaldehyde resin with 1:1.6 m/r contains 22.2g formaldehyde Coating of the UF impregnated paper with melamine formaldehyde resin, molar ratio 1:1.8
40g/m2 melamine formaldehyde resin with 1:1.8 m/r contains 12g formaldehyde Combined formaldehyde content ca. 34.2g

Replacing 40% of the urea formaldehyde resin with the inventive mixture removes ca. 8.9g of formaldehyde, a reduction of ca. 26%. Furthermore when it is feasible to replace some of the melamine formaldehyde coating resin with the inventive mixture, for example in white laminates, the % reduction can be increased.

### Example 2

In another example where heavier décor paper is used, for example 120g/m2 with 38% ash content , the possible % reduction is greater, as shown in the following calculation:
120g/m2 white decor paper 38% ash content
First bath saturation with urea formaldehyde resin, molar ratio 1:1.6
75g/m2 urea formaldehyde resin contains 33.3g/m2 formaldehyde
Coating of the UF impregnated paper with melamine formaldehyde resin, molar ratio 1:1.8
40g/m2 melamine formaldehyde resin with 1:1.8 m/r contains 12g formaldehyde Combined formaldehyde content ca. 45.3g

Replacing 40% of the urea formaldehyde resin with the inventive mixture removes ca. 13.3g of formaldehyde, a reduction of ca. 29%. Furthermore when it is feasible to replace some of the melamine formaldehyde coating resin with the inventive mixture, for example in white laminates, the % reduction can be increased.

Furthermore, if the 120g/m2 white decor paper 38% ash is used in a high pressure laminate application the resin in the decorative layer will usually predominately be melamine formaldehyde. Using the resin amount as 110% of the dry paper weight the amount of MF resin is 132g/m2 of which the formaldehyde content of MF with a molar ratio 1.8 would be 39.6g/m2. Replacing 40% of the total MF resin with the inventive mixture is a 40% reduction in formaldehyde content.

## Claims

1. A mixture comprising styrene maleic anhydride copolymer amic acid, cyanuric acid, and melamine.

2. A mixture according to claim 1, wherein the styrene maleic anhydride copolymer amic acid is present in an amount in the range between 0.5 to 25 % by weight of the mixture, preferably in the range between 1 to 15 % by weight, most preferably in the range 2 to 10% by weight.

3. A mixture according to claim 1 or 2, wherein the mixture is a suspension, preferably wherein a majority of the contained particles have a particle size of less than 3 µm, particularly preferably in the range between 0.5 to 3 µm.

4. A mixture according to any one of claims 1 to 3, further comprising a photocatalyst material, wherein the photocatalyst material preferably comprises TiO₂ as the basic component of the photocatalyst material.

5. A mixture according to any one of claims 1 to 4 comprising one or more materials selected from the group consisting of pigments, dyes, antimicrobial material, antibacterial material, fire retardant material and hard anti-abrasion material.

6. A method for producing a mixture according to any one of claims 1 to 5 comprising
a) mixing styrene maleic anhydride copolymer amic acid and cyanuric acid
b) adding melamine
c) optionally adding one or more materials selected from the group consisting of photocatalyst material, pigments, dyes, antimicrobial material, antibacterial material, fire retardant material and hard anti-abrasion material.

7. Method according to claim 6, wherein the cyanuric acid and/or the melamine are pre-dispersed in water.

8. Method according to claims 6 or 7, wherein the mixture obtained from step b) and/or step c) is homogenized and optionally comminuted.

9. Use of a mixture according to any one of claims 1 to 5 as
- an opacifier or extender of opacifying agents,
- a component of a decor paper included in the mass before forming of the decor paper web on a paper making machine,
- a component of a décor paper applied to the decor paper after formation of the paper web,
- as a component of a formaldehyde free resin material used in the manufacture of a pre-impregnated decor paper, or
- as inclusion on a decor paper or pre-impregnated decor paper to enhance the printability of the paper surface.

10. Use of a mixture according to any of claim 1 to 5 as a replacement material for a portion of an amino formaldehyde resin used in the saturation and/or coating of a decor paper.

11. A laminate comprising a mixture according to any one of claims 1 to 5.

12. A laminate according to claim 11, wherein a laminate component, preferably a decor paper, comprises in part the mixture.

## Patentansprüche

1. Ein Gemisch, das Styrol-Maleinsäureanhydrid-Copolymer, Aminsäure, Cyanursäure und Melamin enthält.

2. Gemisch nach Anspruch 1, wobei die Styrol-Maleinsäureanhydrid-Copolymer-Amidsäure in einer Menge im Bereich zwischen 0,5 und 25 Gew.-% des Gemischs, vorzugsweise im Bereich zwischen 1 und 15 Gew.-%, am meisten bevorzugt im Bereich zwischen 2 und 10 Gew.-%, vorliegt.

3. Gemisch nach Anspruch 1 oder 2, wobei das Gemisch eine Suspension ist, in der vorzugsweise ein Großteil der enthaltenen Teilchen eine Teilchengröße von weniger als 3 µm, besonders bevorzugt im Bereich zwischen 0,5 und 3 µm, aufweist.

4. Gemisch nach einem der Ansprüche 1 bis 3, ferner umfassend ein Photokatalysatormaterial, wobei das Photokatalysatormaterial vorzugsweise TiO₂ als Grundkomponente des Photokatalysatormaterials umfasst.

5. Mischung nach einem der Ansprüche 1 bis 4, die ein oder mehrere Materialien enthält, die aus der Gruppe ausgewählt sind, die aus Pigmenten, Farbstoffen, antimikrobiellem Material, antibakteriellem Material, feuerhemmendem Material und hartem Antiabriebmaterial besteht.

6. Verfahren zur Herstellung einer Mischung nach einem der Ansprüche 1 bis 5, umfassend
a) Mischen von Styrol-Maleinsäureanhydrid-Copolymer, Aminsäure und Cyanursäure
b) Zugabe von Melamin
c) gegebenenfalls Zugabe eines oder mehrerer Materialien aus der Gruppe bestehend aus Photokatalysatormaterial, Pigmenten, Farbstoffen, antimikrobiellem Material, antibakteriellem Material, feuerhemmendem Material und hartem Antiabriebmaterial.

7. Verfahren nach Anspruch 6, wobei die Cyanursäure und/oder das Melamin in Wasser vordispergiert werden.

8. Verfahren nach Anspruch 6 oder 7, wobei die in Schritt b) und/oder Schritt c) erhaltene Mischung homogenisiert und gegebenenfalls zerkleinert wird.

9. Verwendung einer Mischung nach einem der Ansprüche 1 bis 5 als
- ein Trübungsmittel oder ein Streckmittel für Trübungsmittel,
- eine Komponente eines Dekorpapiers, die in der Masse vor der Formung der Dekorpapierbahn auf einer Papiermaschine enthalten ist,
- eine Komponente eines Dekorpapiers, die nach der Bildung der Papierbahn auf das Dekorpapier aufgebracht wird,
- als Bestandteil eines formaldehydfreien Harzmaterials, das bei der Herstellung eines vorimprägnierten Dekorpapiers verwendet wird, oder
- als Einschluss auf einem Dekorpapier oder vorimprägniertem Dekorpapier zur Verbesserung der Bedruckbarkeit der Papieroberfläche.

10. Verwendung einer Mischung nach einem der Ansprüche 1 bis 5 als Ersatzmaterial für einen Teil eines Aminoformaldehydharzes, das bei der Tränkung und/oder Beschichtung eines Dekorpapiers verwendet wird.

11. Laminat, umfassend eine Mischung nach einem der Ansprüche 1 bis 5.

12. Laminat nach Anspruch 11, wobei eine Laminatkomponente, vorzugsweise ein Dekorpapier, zum Teil aus der Mischung besteht.

## Revendications

1. Mélange comportant de l'acide amique copolymère de styrène-anhydride maléique, de l'acide cyanurique et de la mélamine.

2. Mélange selon la revendication 1, dans lequel l'acide amique copolymère de styrène-anhydride maléique est présent en une teneur d'une plage comprise entre 0,5 et 25 % en poids du mélange, de préférence d'une plage comprise entre 1 et 15 % en poids, de manière encore plus préférée d'une plage comprise entre 2 et 10 % en poids.

3. Mélange selon la revendication 1 ou 2, dans lequel le mélange est une suspension, dans lequel de préférence, une majorité des particules contenues présente une taille des particules de moins de 3 µm, de préférence notamment d'une plage comprise entre 0,5 et 3 µm.

4. Mélange selon l'une des revendications 1 à 3, comportant par ailleurs un matériau photocatalyseur, le matériau photocatalyseur comportant de préférence, du TiO₂ comme composant de base du matériau photocatalyseur.

5. Mélange selon l'une des revendications 1 à 4, comportant une ou plusieurs matières choisies dans le groupe composé par des pigments, des teintures, de la matière antimicrobienne, de la matière antibactérienne, du matériau ignifuge et du matériau dur antiabrasif.

6. Procédé de fabrication d'un mélange selon l'une des revendications 1 à 5, comportant
a) le mélange de l'acide amique copolymère de styrène-anhydride maléique avec de l'acide cyanurique,
b) l'ajout de mélamine,
c) en option, l'ajout d'une ou de plusieurs matières choisies dans le groupe composé par du matériau photocatalyseur, des pigments, des teintures, de la matière antimicrobienne, de la matière antibactérienne, du matériau ignifuge et du matériau dur antiabrasif.

7. Procédé selon la revendication 6, dans lequel l'acide cyanurique et/ou la mélamine est/sont pré-dispersé/e/s dans l'eau.

8. Procédé selon la revendication 6 ou 7, dans lequel le mélange obtenu à l'étape b) et/ou l'étape c) est homogénéisé et réduit en option.

9. Utilisation d'un mélange selon l'une des revendications 1 à 5 comme
- agent opacifiant ou comme extendeur d'agents opacifiants,
- composant d'un papier décor inclus dans la masse avant la formation de la bande de papier décor dans une machine à papier,
- composant d'un papier décor appliqué sur la papier dé468cor après formation de la bande de papier,
- composant d'un matériau de résine libre de formaldéhyde mis en oeuvre dans la fabrication d'un papier décor préimprégné, ou
- inclusion sur du papier décor ou du papier décor préimprégné afin d'améliorer l'imprimabilité de la surface du papier.

10. Utilisation d'un mélange selon l'une des revendications 1 à 5 comme matériau de remplacement pour une partie d'une résine aminoformaldéhyde utilisée dans la saturation et/ou l'enduction d'un papier décor.

11. Stratifié comprenant un mélange selon l'une des revendications 1 à 5.

12. Stratifié selon la revendication 11, dans lequel un composant stratifié, de préférence un papier décor, comporte partiellement le mélange.
